# EUROPEAN PATENT APPLICATION

(11) **EP 4 729 276 A1**
(43) Date of publication of application: **22.04.2026**
(21) Application number: 24854370.4
(22) Date of filing: 05.08.2024
(51) Int. Cl.: B29C 65/00, B29D 99/00, H01M 50/105, H01M 50/183, B29L 31/00

(54) **SEALING DEVICE**

(30) Priority: 16.08.2023 KR 20230107247; 02.08.2024 KR 20240103308
(71) Applicant: LG Energy Solution, Ltd., Seoul 07335 (KR)
(72) Inventor: LEE, Ji Sun, Daejeon 34122 (KR); KIM, Sang Hun, Daejeon 34122 (KR); LEE, Jae Ho, Daejeon 34122 (KR); CHOI, Ji Eun, Daejeon 34122 (KR)
(74) Representative: Goddar, Heinz J.
(86) International application number: PCT/KR2024/011528
(87) International publication number: WO 2025/037818

(57) **Abstract**

A sealing apparatus according to an embodiment of the present disclosure may seal an object. The sealing apparatus may include a first block including a first sealing surface and a second sealing surface formed along a direction facing away from the first sealing surface, and configured to seal a plurality of target surfaces of the object; and a second block that is driven toward the first block to bring the object into close contact with the first block. A first imaginary surface perpendicular to the first sealing surface and a second imaginary surface perpendicular to the second sealing surface may cross each other.

## Description

### TECHNICAL FIELD

### CROSS-REFERENCE TO RELATED APPLICATIONS

The present application claims priority to Korean Patent Application No. 10-2023-0107247 filed on August 16, 2023 and Korean Patent Application No. 10-2024-0103308 filed on August 2, 2024 in the Republic of Korea, the disclosures of which are incorporated herein by reference.

### TECHNICAL FIELD

The present disclosure relates to a sealing apparatus, and more particularly, to a sealing apparatus for sealing a plurality of target surfaces of an object.

### BACKGROUND ART

Secondary batteries can be widely applied to different types of products and possess electrical properties having high energy density. Secondary batteries are applied to not only portable electronic devices but also electric vehicles or hybrid electric vehicles that are powered by a source of electric power and power storage systems. Secondary batteries remarkably reduce the use of fossil fuels, and in addition to the primary advantage, they do not generate by-products from the use of energy. From this perspective, secondary batteries are attracting attention as a new source of energy that is more environmentally friendly and energy-efficient.

A pouch-type secondary battery is generally manufactured by receiving a stacked or wound electrode assembly in a battery case of a pouch sheet, the electrode assembly including a positive electrode, a negative electrode and a separator interposed between the positive electrode and the negative electrode, followed by electrolyte solution injection or filling. The pouch-type secondary battery may have sealability by sealing an upper surface and a lower surface of the pouch sheet protruded along the edge of the secondary battery together. However, the existing sealing method may be a suitable method for thin secondary batteries but as higher energy secondary batteries are manufactured, secondary batteries become thicker and an area to be sealed is formed with a 3-dimensional structure, so when sealing is performed through the existing sealing method, it is difficult to ensure sealability of sides and corners.

There is a need for development of technology for solving the above-described problem.

### SUMMARY

### TECHNICAL PROBLEM

The present disclosure is designed to solve the above-described problem, and therefore the present disclosure is directed to providing a sealing apparatus for sealing a plurality of target surfaces and corners between the target surfaces of an object that is a 3-dimensional structure all at once.

### TECHNICAL SOLUTION

A sealing apparatus according to an embodiment of the present disclosure may seal an object. The sealing apparatus may include a first block including a first sealing surface and a second sealing surface formed along a direction facing away from the first sealing surface, and configured to seal a plurality of target surfaces of the object; and a second block that is driven toward the first block to bring the object into close contact with the first block. A first imaginary surface perpendicular to the first sealing surface and a second imaginary surface perpendicular to the second sealing surface may cross each other.

The first sealing surface may seal a first target surface of the object, and the second sealing surface may seal a second target surface formed along a direction facing away from the first target surface.

The first block may further include a third sealing surface connecting the first sealing surface and the second sealing surface, and formed as a curved surface.

The third sealing surface may be configured to seal a corner connecting the plurality of target surfaces, and a radius of curvature of the third sealing surface may correspond to a radius of curvature of the corner of the object.

The first block may further include a first elastic member disposed on the first sealing surface, the second sealing surface and the third sealing surface.

The second block may be driven in an oblique direction toward the first block.

The second block may be configured to seal the object. The second block may include a first surface formed in parallel to the first sealing surface; and a second surface formed in parallel to the second sealing surface and in a direction facing away from the first surface.

The second block may further include a third surface connecting the first surface and the second surface, and formed as a curved surface.

A radius of curvature of the third surface may correspond to a radius of curvature of a corner of the object.

The second block may be driven so that the first surface is located at a location at which the first surface faces the first sealing surface and the second surface is located at a location at which the second surface faces the second sealing surface.

An area of the first surface may be smaller than an area of the first sealing surface, and an area of the second surface may be smaller than an area of the second sealing surface.

The second block may further include a second elastic member continuously disposed on the first surface, the second surface and the third surface.

The first block may have a first guide groove recessed from an end of the first sealing surface along a length direction thereof; and a second guide groove recessed from an end of the second sealing surface along a length direction thereof. The second block may have a first guide protrusion protruded from an end of the first surface and guided along the first guide groove; and a second guide protrusion protruded from an end of the second surface and guided along the second guide groove.

A sealing apparatus according to an embodiment of the present disclosure may seal an object. The sealing apparatus may include a first block including a first sealing surface and a second sealing surface formed in a direction facing away from the first sealing surface, and configured to seal a plurality of target surfaces of the object; and a second block that brings the object into close contact with the first block, and is driven in a direction in which the second block intersects with the first block. A first imaginary surface perpendicular to the first sealing surface and a second imaginary surface perpendicular to the second sealing surface may cross each other.

The first sealing surface may seal a first target surface of the object, and the second sealing surface may seal a second target surface located in a direction facing away from the first target surface.

The first block may further include a third sealing surface connecting the first sealing surface and the second sealing surface, and formed as a curved surface.

The second block may be configured to seal the object, and include a first surface formed in parallel to the first sealing surface; and a second surface formed in parallel to the second sealing surface and in a direction facing away from the first surface.

The second block may be driven to adjust a relative position to the first block according to a size of the object.

The second block may further include a third surface connecting the first surface and the second surface, and formed as a curved surface.

### ADVANTAGEOUS EFFECTS

According to an exemplary embodiment of the present disclosure, it may be possible to seal the plurality of target surfaces and the corners between the target surfaces of the object that is a 3-dimensional structure all at once, thereby improving the speed of the sealing process.

Additionally, for objects with different sizes and shapes, it may be possible to seal the object only by adjusting the relative position between the sealing blocks to fit the size and shape of the object without replacing the sealing blocks, so there is no need for the time and cost required to replace the sealing blocks, leading to improved efficiency of the sealing process.

### BRIEF DESCRIPTION OF THE DRAWINGS

The accompanying drawings illustrate the exemplary embodiments of the present disclosure and together with the following detailed description, serve to provide a better understanding of the technical aspect of the present disclosure, and thus the present disclosure should not be construed as being limited to the drawings.
FIG. 1 is a perspective view exemplarily showing a first block and a second block of a sealing apparatus according to a first embodiment of the present disclosure.
FIG. 2 is an exploded perspective view of an object according to an example.
FIG. 3 is a perspective view showing an object located between the first block and the second block shown in FIG. 1.
FIG. 4 is a perspective view showing that the object shown in FIG. 3 is sealed by the first block and the second block.
FIGS. 5a and 5b are front views exemplarily showing a first block and a second block according to a variation.
FIG. 6 is a perspective view showing that an object is sealed by a sealing apparatus according to a second embodiment of the present disclosure.
FIG. 7 is a perspective view exemplarily showing a first block and a second block of a sealing apparatus according to a third embodiment of the present disclosure.
FIGS. 8a and 8b are front views illustrating the operation of a guide groove and a guide protrusion shown in FIG. 7.
FIG. 9 is a perspective view exemplarily showing a first block and a second block of a sealing apparatus according to a fourth embodiment of the present disclosure.
FIG. 10 is a perspective view showing that the first block and the second block shown in FIG. 9 seal an object.
FIG. 11 is a perspective view exemplarily showing a first block and a second block of a sealing apparatus according to a fifth embodiment of the present disclosure.

### DETAILED DESCRIPTION

Hereinafter, exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, the terms or words used in the specification and the appended claims should not be construed as limited to general and dictionary meanings, but rather interpreted based on the meanings and concepts corresponding to the technical aspect of the present disclosure on the basis of the principle that the inventor is allowed to define the terms appropriately for the best explanation.

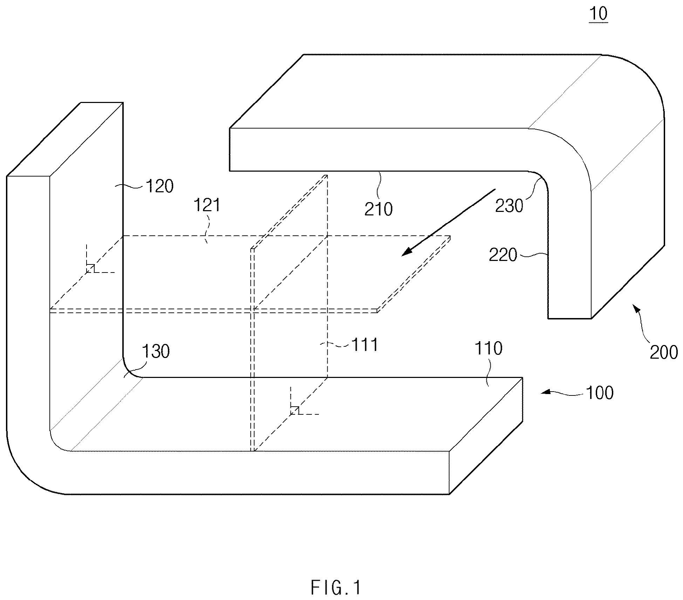

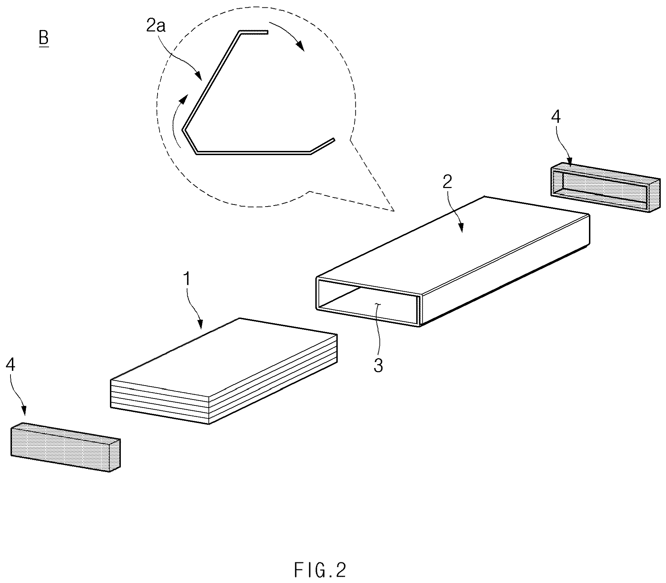

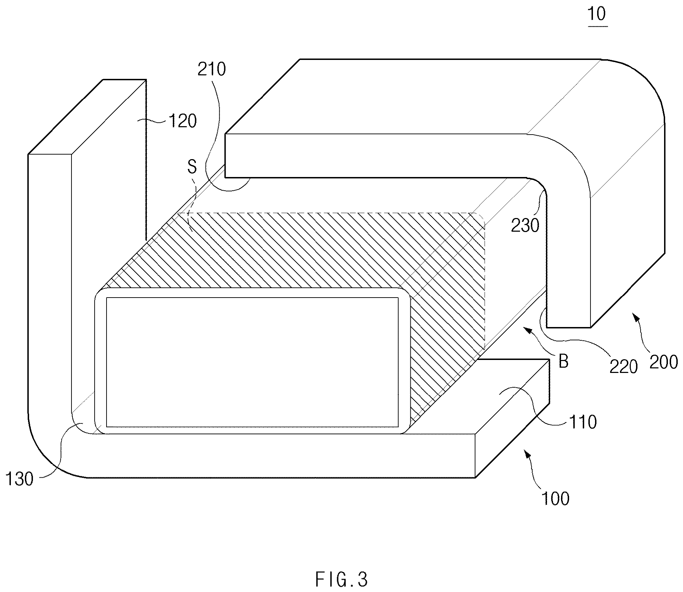

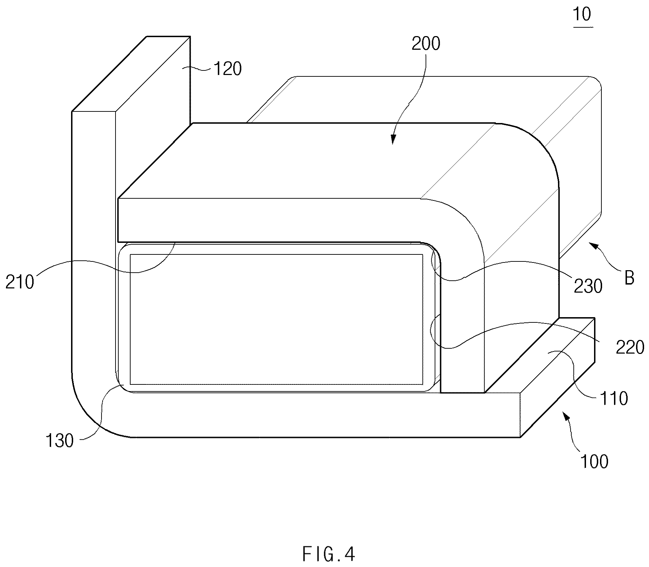

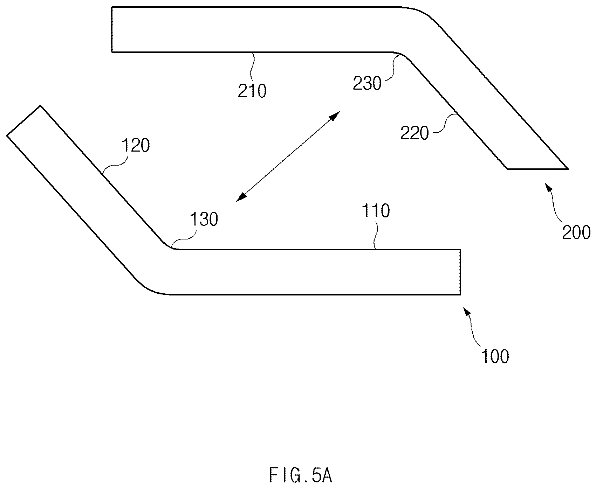

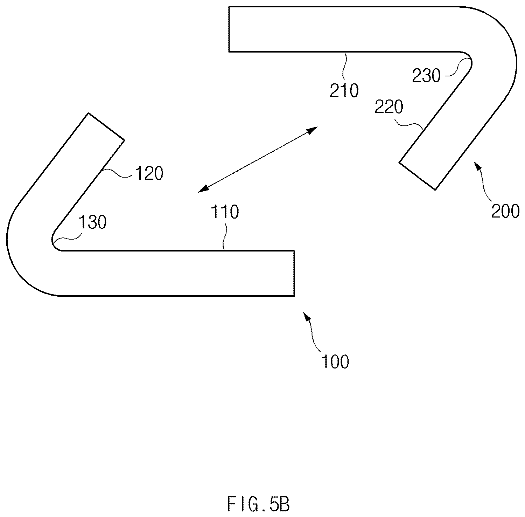

FIG. 1 is a perspective view exemplarily showing a first block and a second block of a sealing apparatus according to a first embodiment of the present disclosure, FIG. 2 is an exploded perspective view of an object according to an example, FIG. 3 is a perspective view showing the object located between the first block and the second block shown in FIG. 1, FIG. 4 is a perspective view showing that the object shown in FIG. 3 is sealed by the first block and the second block, and FIGS. 5a and 5b are front views exemplarily showing the first block and the second block according to a variation.

The sealing apparatus 10 according to the first embodiment of the present disclosure may be an apparatus for sealing a plurality of outer surfaces or a plurality of inner surfaces of the object B (see FIG. 3) all at once. The sealing apparatus 10 may include the first block 100 and the second block 200.

The object B may have a shape with a predetermined width and thickness. For example, the object B may be a secondary battery. However, the object B is not limited thereto.

Describing with reference to FIG. 2, the object B may be a secondary battery including an electrode assembly 1, a pouch-type packaging material 2 that surrounds the electrode assembly 1 and has an opening 3 at two sides, and a cover member 4 covering the opening 3 of the packaging material 2.

The sealing apparatus 10 may seal the packaging material 2 and the cover member 4 of the secondary battery together. For example, the packaging material 2 may be defined as a laminate sheet 2a surrounding the electrode assembly 1 and the peripheral portion of the cover member 4 together. In this case, the sealing apparatus 10 may seal the outer periphery of the cover member 4 and the packaging material 2 together.

The first block 100 may seal a plurality of target surfaces S of the object B by applying heat and pressure to the object B while in contact with the object B. The target surface S is a predetermined area of the outer surface or the inner surface of the object B and may refer to an area that is sealed by the first block 100 and the second block 200 while in direct contact with it. Taking the secondary battery shown in FIG. 2 as an example, the target surface S may be an area of the packaging material 2 that contacts the outer periphery of the cover member 4.

The first block 100 may include a bent shape to seal the plurality of target surfaces S of the object B all at once. More specifically, the first block 100 may include a first sealing surface 110 and a second sealing surface 120. The first sealing surface 110 and the second sealing surface 120 may be formed on the inner side surface where the first block 100 faces the object B.

The first sealing surface 110 may seal a first target surface of the object B. The first target surface may be a surface that faces the first sealing surface 110 among the target surfaces S. The first sealing surface 110 may be disposed facing the first target surface, and be formed with an area that is equal to or larger than an area of the first target surface to fully seal the first target surface.

The first sealing surface 110 may seal the first target surface by applying heat and pressure to the first target surface while in direct contact with the first target surface. The first target surface may be a flat shape.

The second sealing surface 120 may seal a second target surface of the object B. The second target surface may be a surface that faces the second sealing surface 120 among the target surfaces S. The second target surface may be formed along a direction facing away from the first target surface. The first target surface and the second target surface may be surfaces continuously formed with a corner between them. The second target surface may form a right, acute or obtuse angle with the first target surface.

The second sealing surface 120 may be disposed facing the second target surface, and be formed with an area that is equal to or larger than an area of the second target surface to fully seal the second target surface.

The second sealing surface 120 may be formed along a direction facing away from the first sealing surface 110. The second sealing surface 120 may be formed at a predetermined angle with respect to the first sealing surface 110. As an example, as shown in FIG. 1, the angle between the first sealing surface 110 and the second sealing surface 120 may be a right angle. As another example, as shown in FIG. 5a, the angle between the first sealing surface 110 and the second sealing surface 120 may be an obtuse angle. As still another example, as shown in FIG. 5b, the angle between the first sealing surface 110 and the second sealing surface 120 may be an acute angle. The angle between the second sealing surface 120 and the first sealing surface 110 may be equal to the angle between the second target surface and the first target surface.

A first imaginary surface 111 perpendicular to the first sealing surface 110 and a second imaginary surface 121 perpendicular to the second sealing surface 120 cross each other, so the first sealing surface 110 and the second sealing surface 120 may seal the plurality of target surfaces S of the object B having a 3-dimensional shape, not a 2-dimensional structure on the same plane.

The second sealing surface 120 may seal the second target surface by applying heat and pressure to the second target surface of the object B. The second sealing surface 120 may be disposed facing the second target surface, and the second target surface may be a flat shape.

The first block 100 may further include a third sealing surface 130 connecting the first sealing surface 110 and the second sealing surface 120 and formed as a curved surface.

The third sealing surface 130 may be formed on the inner side surface where the first block 100 faces the object B. The third sealing surface 130 may be disposed between the first sealing surface 110 and the second sealing surface 120 to continuously connect the first sealing surface 110 and the second sealing surface 120. The third sealing surface 130 may connect the inner ends of the first sealing surface 110 and the second sealing surface 120.

The third sealing surface 130 may be formed as the curved surface having a predetermined radius of curvature, and may seal the corner of the object B by applying heat and pressure to the corner of the object B. The radius of curvature of the third sealing surface 130 may be equal to or larger than the radius of curvature of the corner of the object B that contacts the third sealing surface 130. Because the radius of curvature of the third sealing surface 130 corresponds to the radius of curvature of the corner of the object B, the third sealing surface 130 may surround the corner of the object B, and the corner of the object B may come into close contact with the third sealing surface 130.

The third sealing surface 130 may seal the corner connecting the first target surface and the second target surface of the object B.

That is, the first block 100 may seal the first target surface and the second target surface of the object B and the corner between the first target surface and the second target surface all at once.

The second block 200 may seal the plurality of target surfaces S of the object B by applying heat and pressure to the object B while in contact with the object B.

The second block 200 may be driven to push the object B toward the first block 100 to bring the object B into close contact with the first block 100. More specifically, the second block 200 may be driven to push the object B toward the first block 100 to bring the object B into close contact with the first sealing surface 110, the second sealing surface 120 and the third sealing surface 130 of the first block 100.

The second block 200 may be driven in an oblique direction toward the first block 100. The second block 200 may be disposed at a distant location in the upward direction obliquely with respect to the first block 100, and when the object B is mounted on the inner side surface of the first block 100, the second block 200 may be driven to move toward the first block 100. The first block 100 may be also driven to move toward the second block 200, and the first block 100 and the second block 200 may be driven to move in an oblique direction toward each other. The first block 100 and the second block 200 may be driven in an oblique direction toward each other as well as in a top-bottom direction, a front-rear direction and a left-right direction.

The second block 200 may be configured to seal the plurality of target surfaces S of the object B all at once by applying heat and pressure to the plurality of target surfaces S of the object B while in contact with the object B.

The second block 200 may include a first surface 210 and a second surface 220.

The second block 200 may be formed including a bent shape to seal the plurality of target surfaces S of the object B all at once. The second block 200 may include the first surface 210 and the second surface 220. The first surface 210 and the second surface 220 may be formed on the inner side surface where the second block 200 faces the object B.

The first surface 210 may seal a third target surface of the object B. The third target surface may be a surface that faces the first surface 210 among the target surfaces S. The first surface 210 may be formed with an area that is equal to or larger than an area of the third target surface to fully seal the third target surface facing the first surface 210.

The first surface 210 may be formed in parallel to the first sealing surface 110, and may seal the third target surface that is the opposite surface to the first target surface of the object B. The first surface 210 may be formed in a flat shape.

The first surface 210 may seal the third target surface by applying heat and pressure to the third target surface while in direct contact with the third target surface. The third target surface S may be a flat shape.

The second block 200 may be driven so that the first surface 210 is located at a location at which the first surface 210 faces the first sealing surface 110 of the first block 100. The first surface 210 and the first sealing surface 110 may be driven in a direction in which they get closer to each other, and may seal the first target surface and the third target surface of the object B by applying pressure to them.

The area of the first surface 210 may be equal to or smaller than the area of the first sealing surface 110, and the area of the second surface 220 may be equal to or smaller than the area of the second sealing surface 120.

The second surface 220 may be formed in parallel to the second sealing surface 120, and be formed in a direction facing away from the first surface 210. The second surface 220 may seal a fourth target surface that is the opposite surface to the second target surface of the object B. The fourth target surface may be a surface that faces the second surface 220 among the target surfaces S. That is, the second surface 220 may be formed at a predetermined angle with respect to the first surface 210. As an example, as shown in FIG. 1, the angle between the first surface 210 and the second surface 220 may be a right angle. As another example, as shown in FIG. 5a, the angle between the first surface 210 and the second surface 220 may be an obtuse angle. As still another example, as shown in FIG. 5b, the angle between the first surface 210 and the second surface 220 may be an acute angle. The angle between the second surface 220 and the first surface 210 may be equal to the angle between the fourth target surface and the third target surface.

The second surface 220 may seal the fourth target surface by applying heat and pressure to the fourth target surface of the object B. The second surface 220 may be a flat shape.

A third imaginary surface (not shown) perpendicular to the first surface 210 and a fourth imaginary surface (not shown) perpendicular to the second surface 220 cross each other, so the first surface 210 and the second surface 220 may seal the plurality of target surfaces S of the object B of a 3-dimensional structure, not a 2-dimensional structure on the same plane.

The second surface 220 may seal the fourth target surface of the object B. The fourth target surface may be formed along a direction facing away from the third target surface. The third target surface and the fourth target surface may be surfaces continuously formed with a corner between them, and the fourth target surface may be formed at a right, acute or obtuse angle with respect to the third target surface.

The second block 200 may be driven so that the second surface 220 is located at a location at which the second surface 220 faces the second sealing surface 120 of the first block 100. The second surface 220 and the second sealing surface 120 may be driven in a direction in which they get closer to each other, and may seal the second target surface and the fourth target surface of the object B by applying pressure to them.

The second block 200 may further include a third surface 230 connecting the first surface 210 and the second surface 220 and formed as a curved surface.

The third surface 230 may seal the corner of the object B. More specifically, the third surface 230 may seal the corner connecting the third target surface and the fourth target surface of the object B by applying pressure to it.

The third surface 230 may be formed on the inner side surface of the second block 200 facing the object B. The third surface 230 may be disposed between the first surface 210 and the second surface 220 to continuously connect the first surface 210 and the second surface 220. The third surface 230 may connect the inner ends of the first surface 210 and the second surface 220.

The third surface 230 may be formed as the curved surface having a predetermined radius of curvature, and may seal the corner of the object B by applying heat and pressure to the corner of the object B. The radius of curvature of the third surface 230 may be equal to or larger than the radius of curvature of the corner of the object B that contacts the third surface 230. Because the radius of curvature of the third surface 230 corresponds to the radius of curvature of the corner of the object B, the third surface 230 may surround the corner of the object B, and the corner of the object B may come into close contact with the third surface 230.

The third surface 230 may seal the corner connecting the third target surface and the fourth target surface of the object B.

That is, the second block 200 may seal the third target surface and the fourth target surface of the object B and the corner between the third target surface and the fourth target surface all at once.

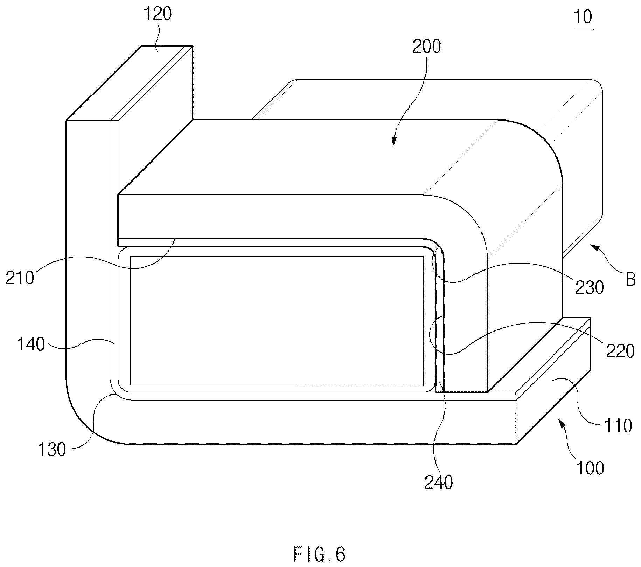

FIG. 6 is a perspective view showing that the object is sealed by the sealing apparatus according to a second embodiment of the present disclosure.

Hereinafter, a difference from the first embodiment will be described, and the same description is incorporated by reference.

The sealing apparatus according to the second embodiment of the present disclosure may further include an elastic member 140, 240 provided in at least one of the first block 100 or the second block 200.

The elastic member 140, 240 may include a flexible material that elastically deforms. Additionally, the elastic member 140, 240 may include a heat resistant material to withstand high temperature. For example, the elastic member 140, 240 may include at least one material of rubber, silicone or plastic. However, the material of the elastic member 140, 240 is not limited thereto.

The following description is made, taking the first block 100 including the elastic member 140 and the second block 200 including the elastic member 240 as an example.

The first block 100 may further include the first elastic member 140.

The first elastic member 140 may be located on the inner side surface of the first block 100 facing the object B, and be continuously disposed along the first sealing surface 110, the third sealing surface 130 and the second sealing surface 120.

The first elastic member 140 may be disposed on the first sealing surface 110, the second sealing surface 120 and the third sealing surface 130, and be continuously disposed along the first sealing surface 110, the third sealing surface 130 and the second sealing surface 120.

When the first block 100 applies pressure to the object B, the first elastic member 140 may uniformly transmit the force applied by the first block 100 to the plurality of target surfaces S of the object B and the corner between the plurality of target surfaces S through the first elastic member 140, and induce a close contact between the first block 100 and the plurality of target surfaces S.

Additionally, the first elastic member 140 may be located between the first block 100 and the object B. When the first block 100 applies pressure to the object B, the first elastic member 140 may elastically deform. Accordingly, even a small gap between the first block 100 and the object B may be filled with the deformed first elastic member 140, thereby uniformly transmitting the force applied by the first block 100 to the plurality of target surfaces S and the corner between the plurality of target surfaces S. In particular, the first elastic member 140 may fill the gap generated by a radius of curvature difference between the third sealing surface 130 and the corner of the object B, thereby transmitting the force applied by the third sealing surface 130 to the corner of the object B.

The second block 200 may further include the second elastic member 240.

The second elastic member 240 may be located on the inner side surface of the second block 200 facing the object B, and be continuously disposed along the first surface 210, the third surface 230 and the second surface 220.

The second elastic member 240 may be disposed on the first surface 210, the second surface 220 and the third surface 230, and be continuously disposed along the first surface 210, the third surface 230 and the second surface 220.

When the second block 200 applies pressure to the object B, the second elastic member 240 may uniformly transmit the force applied by the second block 200 to the plurality of target surfaces S of the object B and the corner between the target surfaces S through the second elastic member 240, and induce a close contact between the second block 200 and the plurality of target surfaces S.

Additionally, the second elastic member 240 may be located between the second block 200 and the object B. When the second block 200 applies pressure to the object B, the second elastic member 240 may elastically deform. Accordingly, even a small gap between the second block 200 and the object B may be filled with the second elastic member 240, thereby uniformly transmitting the force applied by the second block 200 to all the plurality of target surfaces S and the corner between the target surfaces S. In particular, the second elastic member 240 may fill the gap generated by a radius of curvature difference between the third surface 230 and the corner of the object B, thereby transmitting the force applied by the third surface 230 to the corner of the object B.

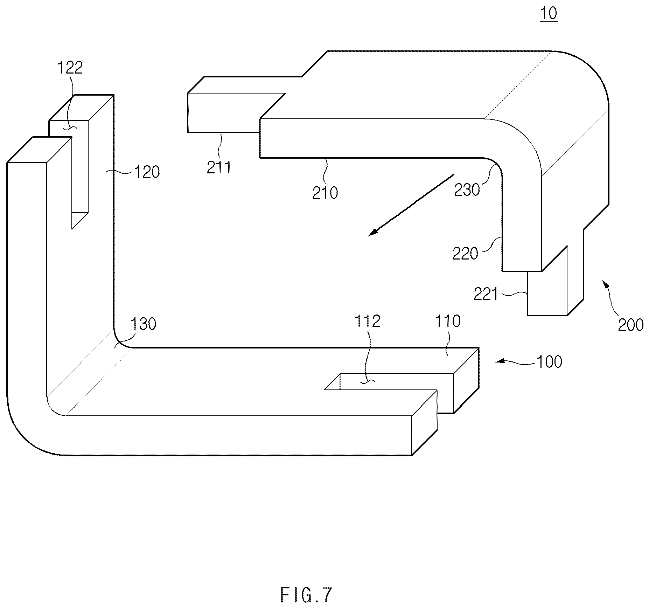

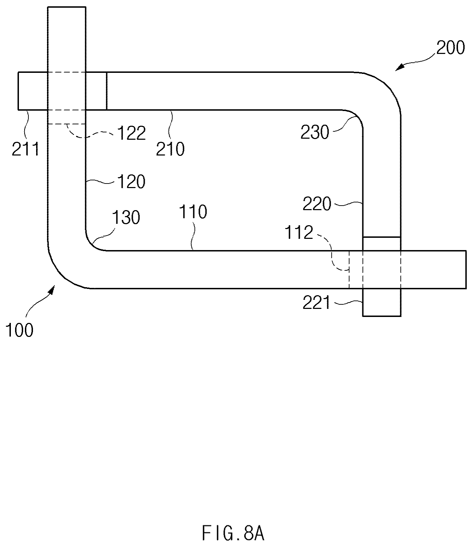

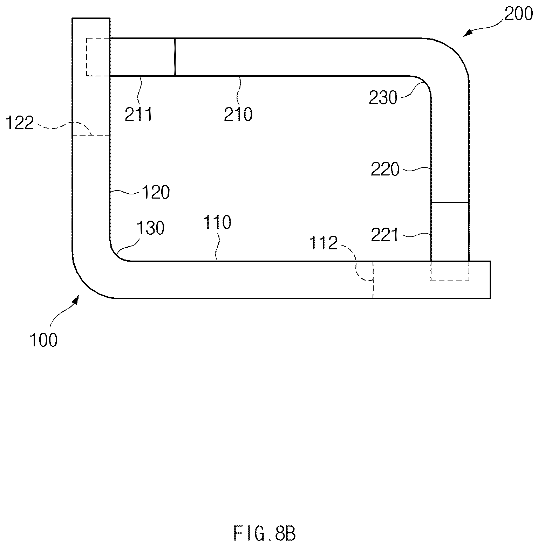

FIG. 7 is a perspective view exemplarily showing the first block and the second block of the sealing apparatus according to a third embodiment of the present disclosure, and FIGS. 8a and 8b are front views illustrating the operation of a guide groove and a guide protrusion shown in FIG. 7.

Hereinafter, a difference from the first embodiment will be described, and the same description is incorporated by reference.

The sealing apparatus 10 according to the third embodiment of the present disclosure may adjust the placement of the first block 100 and the second block 200 to fit the size of the object B. Accordingly, for the object B having different sizes, the sealing apparatus 10 may seal the plurality of outer surfaces or the plurality of inner surfaces of the object B all at once.

More specifically, any one of the first block 100 and the second block 200 may have the guide groove 112, 122, and the other one may have the guide protrusion 211, 221 guided along the guide groove 112, 122.

The following description is made, taking the first block 100 having the guide groove 112, 122 and the second block 200 having the guide protrusion 211, 221 as an example.

The first block 100 may have the first guide groove 112 and the second guide groove 122.

The first guide groove 112 may be recessed from the outer side end of the first sealing surface 110 along the length direction of the first sealing surface 110.

The second guide groove 122 may be recessed from the outer side end of the second sealing surface 120 along the length direction of the second sealing surface 120.

The second block 200 may have the first guide protrusion 211 and the second guide protrusion 221.

The first guide protrusion 211 may protrude outwards from the outer side end of the first surface 210 along the length direction of the first surface 210.

The second guide protrusion 221 may protrude outwards from the outer side end of the second surface 220 along the length direction of the second surface 220.

The distance between the first block 100 and the second block 200 may be adjusted to fit the size of the object B located between the first block 100 and the second block 200. The first block 100 and the second block 200 may move closer together to cross each other or far away from each other according to the size of the object B. To make the first block 100 and the second block 200 cross each other, the first guide protrusion 211 may be inserted into the second guide groove 122 and guided while moving along the second guide groove 122, and the second guide protrusion 221 may be inserted into the first guide groove 112 and guided while moving along the first guide groove 112.

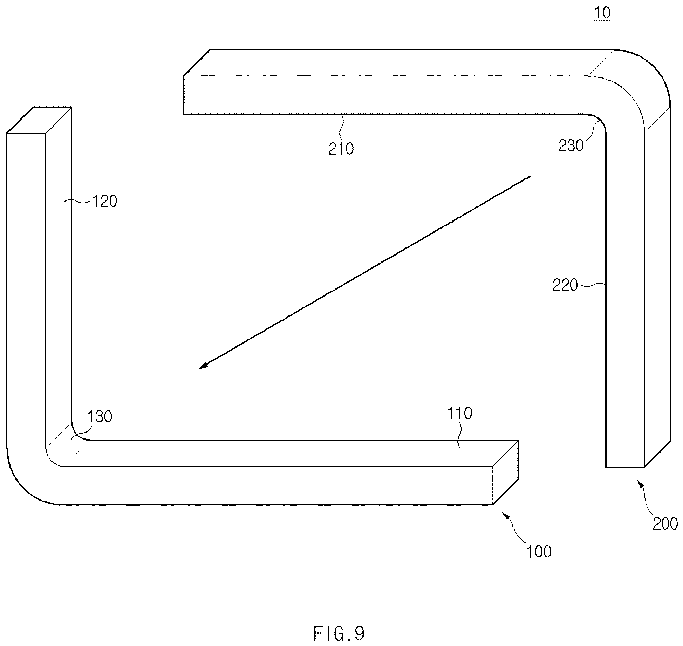

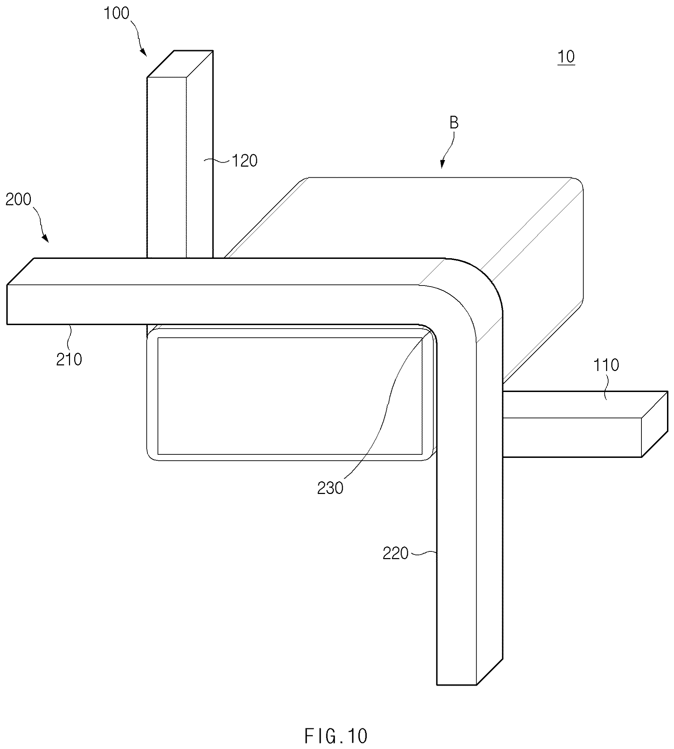

FIG. 9 is a perspective view exemplarily showing the first block and the second block of the sealing apparatus according to a fourth embodiment of the present disclosure, and FIG. 10 is a perspective view showing that the first block and the second block shown in FIG. 9 seal the object.

Hereinafter, a difference from the first embodiment will be described, and the same description is incorporated by reference.

The first block 100 and the second block 200 of the sealing apparatus according to the fourth embodiment of the present disclosure may apply pressure to the object B while getting closer to each other toward a direction in which they diagonally cross each other. That is, instead of being driven toward the first block 100, the second block 200 may be driven in the direction in which the second block 200 intersects with the first block 100.

The second block 200 may be driven to apply pressure to the object B while moving toward the direction in which the second block 200 diagonally intersects with the first block 100.

When the object B is subjected to pressure, the first block 100 and the second block 200 may partially overlap each other in the length direction of the object B. Additionally, the first block 100 and the second block 200 may non-overlap in the direction of the force exerted on the object B.

The second block 200 may be disposed at a distant location in the upward direction obliquely with respect to the first block 100. When the object B is mounted on the inner side surface of the first block 100, the second block 200 may be driven to move toward the object B. As the first block 100 and the second block 200 move to diagonally cross each other, they may move without obstructing their travel directions. Accordingly, the size range of the object B that may be sealed between the first block 100 and the second block 200 may become wider.

When the first block 100 and the second block 200 move to cross each other, they may move with their facing parts in contact with each other. That is, one surface of the first block 100 and one surface of the second block 200 facing each other in the length direction of the object B may come into contact with each other when the object B is subjected to pressure.

The relative position between the first block 100 and the second block 200 may be adjusted according to the size and shape of the object B. For example, the first block 100 and the second block 200 may seal the object B by adjusting the relative position or distance to fit the shape of the object B.

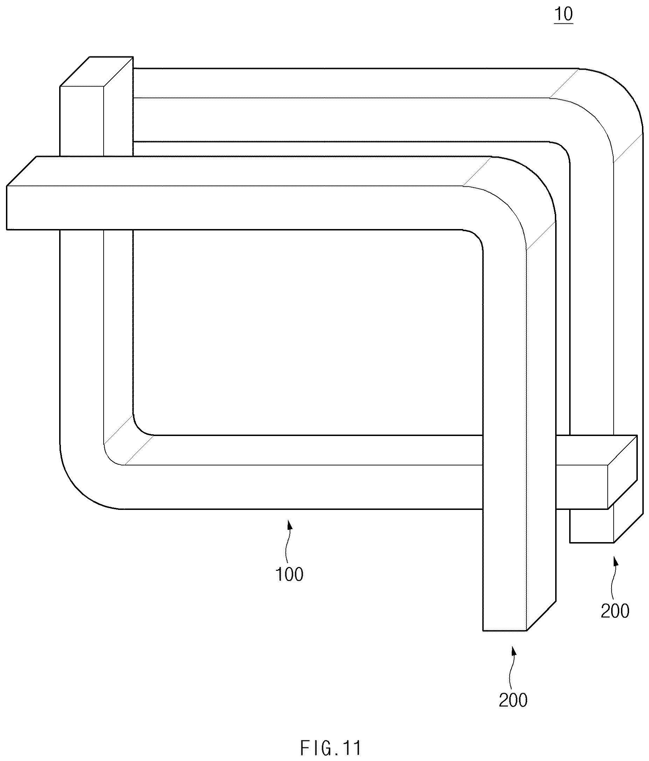

FIG. 11 is a perspective view exemplarily showing the first block and the second block of the sealing apparatus according to a fifth embodiment of the present disclosure.

Hereinafter, a difference from the fourth embodiment will be described, and the same description is incorporated by reference.

In the sealing apparatus according to the fifth embodiment of the present disclosure, at least one of the first block 100 or the second block 200 may include a plurality of blocks. Additionally, the first block 100 and the second block 200 may be arranged in an alternating manner in the length direction of the object B.

For example, when the second block 200 includes the plurality of second blocks, the first block 100 may be located between the plurality of second blocks 200 and may seal the plurality of target surfaces S of the object B all at once together with the second blocks 200. The plurality of second blocks 200 may be arranged in parallel, and be spaced a predetermined distance apart from each other. The first block 100 may be located between the second blocks 200.

The second block 200 and the first block 100 may move in an oblique direction so they diagonally cross each other, and may move in a direction facing each other or facing away from each other.

While the present disclosure has been hereinabove described with regard to a limited number of embodiments and drawings, the present disclosure is not limited thereto and may be embodied in different forms by persons having ordinary skill in the technical field pertaining to the present disclosure within the technical aspect of the present disclosure and the scope of the appended claims and their equivalents.

### [List of Reference Numerals]

| | | | |
|---|---|---|---|
| 10: | Sealing apparatus | 100: | First block |
| 110: | First sealing surface | 111: | First imaginary surface |
| 120: | Second sealing surface | 121: | Secondary imaginary surface |
| 130: | Third sealing surface | 140: | First elastic member |
| 200: | Second block | 210: | First surface |
| 211: | First guide protrusion | 220: | Second surface |
| 221: | Second guide protrusion | 230: | Third surface |
| 240: | Second elastic member | B: | Object |
| S: | Target surface | | |

## Claims

1. A sealing apparatus for sealing an object, the sealing apparatus comprising:
a first block including a first sealing surface and a second sealing surface formed along a direction facing away from the first sealing surface, and configured to seal a plurality of target surfaces of the object; and
a second block that is driven toward the first block to bring the object into close contact with the first block,
wherein a first imaginary surface perpendicular to the first sealing surface and a second imaginary surface perpendicular to the second sealing surface cross each other.

2. The sealing apparatus according to claim 1,
wherein the first sealing surface seals a first target surface of the object, and
wherein the second sealing surface seals a second target surface formed along a direction facing away from the first target surface.

3. The sealing apparatus according to claim 1,
wherein the first block further includes:
a third sealing surface connecting the first sealing surface and the second sealing surface, and formed as a curved surface.

4. The sealing apparatus according to claim 3,
wherein the third sealing surface is configured to seal a corner connecting the plurality of target surfaces, and
wherein a radius of curvature of the third sealing surface corresponds to a radius of curvature of the corner of the object.

5. The sealing apparatus according to claim 3,
wherein the first block further includes:
a first elastic member disposed on the first sealing surface, the second sealing surface and the third sealing surface.

6. The sealing apparatus according to claim 3,
wherein the second block is driven in an oblique direction toward the first block.

7. The sealing apparatus according to claim 1,
wherein the second block is configured to seal the object, and
wherein the second block includes:
a first surface formed in parallel to the first sealing surface; and
a second surface formed in parallel to the second sealing surface and in a direction facing away from the first surface.

8. The sealing apparatus according to claim 7,
wherein the second block further includes:
a third surface connecting the first surface and the second surface, and formed as a curved surface.

9. The sealing apparatus according to claim 8,
wherein a radius of curvature of the third surface corresponds to a radius of curvature of a corner of the object.

10. The sealing apparatus according to claim 7,
wherein the second block is driven so that the first surface is located at a location at which the first surface faces the first sealing surface and the second surface is located at a location at which the second surface faces the second sealing surface.

11. The sealing apparatus according to claim 7,
wherein an area of the first surface is equal to or smaller than an area of the first sealing surface, and
wherein an area of the second surface is equal to or smaller than an area of the second sealing surface.

12. The sealing apparatus according to claim 8,
wherein the second block further includes:
a second elastic member continuously disposed on the first surface, the second surface and the third surface.

13. The sealing apparatus according to claim 7,
wherein the first block has:
a first guide groove recessed from an end of the first sealing surface along a length direction thereof; and
a second guide groove recessed from an end of the second sealing surface along a length direction thereof, and
wherein the second block has:
a first guide protrusion protruded from an end of the first surface and guided along the first guide groove; and
a second guide protrusion protruded from an end of the second surface and guided along the second guide groove.

14. A sealing apparatus for sealing an object, the sealing apparatus comprising:
a first block including a first sealing surface and a second sealing surface formed in a direction facing away from the first sealing surface, and configured to seal a plurality of target surfaces of the object; and
a second block that brings the object into close contact with the first block, and is driven in a direction in which the second block intersects with the first block,
wherein a first imaginary surface perpendicular to the first sealing surface and a second imaginary surface perpendicular to the second sealing surface cross each other.

15. The sealing apparatus according to claim 14,
wherein the first sealing surface seals a first target surface of the object, and
wherein the second sealing surface seals a second target surface located in a direction facing away from the first target surface.

16. The sealing apparatus according to claim 14,
wherein the first block further includes:
a third sealing surface connecting the first sealing surface and the second sealing surface, and formed as a curved surface.

17. The sealing apparatus according to claim 14,
wherein the second block is configured to seal the object, and
wherein the second block includes:
a first surface formed in parallel to the first sealing surface; and
a second surface formed in parallel to the second sealing surface and in a direction facing away from the first surface.

18. The sealing apparatus according to claim 17,
wherein the second block is driven to adjust a relative position to the first block according to a size of the object.

19. The sealing apparatus according to claim 17,
wherein the second block further includes:
a third surface connecting the first surface and the second surface, and formed as a curved surface.
